# EUROPÄISCHE PATENTSCHRIFT

(11) **EP 0 368 023 B1**
(45) Veröffentlichungstag und Bekanntmachung des Hinweises auf die Patenterteilung: **24.08.1994**
(21) Anmeldenummer: 89118954.0
(22) Anmeldetag: 12.10.1989
(51) Int. Cl.: B23Q 11/10

(54) **Werkzeugsystem**
Tooling system
Système d'outils

(30) Priorität: 11.11.1988 DE 3838318
(43) Veröffentlichungstag der Anmeldung: 16.05.1990
(73) Patentinhaber: Krupp Widia GmbH, 45145 Essen (DE)
(72) Erfinder: von Haas, Rainer, Dipl.-Ing., D-2054 Geesthacht (DE); Ruther, Günter, D-4370 Marl (DE)
(74) Vertreter: Vomberg, Friedhelm, Dipl.-Phys.

(56) Entgegenhaltungen:
- EP-A- 0 252 291
- CH-A- 578 706
- DE-A- 2 632 228
- DE-A- 3 423 060
- US-A- 3 603 203

## Beschreibung

Die Erfindung betrifft ein Werkzeugsystem, bei dem ein Werkzeugkopf mittels einer integrierten Spanneinrichtung auswechselbar an einem Werkzeughalter angeordnet ist und das eine integrierte Kühlmittelzuführung aufweist.

Ein modulares Werkzeugsystem dieser Art ist aus dem DE-U-84 37 207 bekannt. Die beispielsweise für eine numerisch gesteuerte Werkzeugmaschine bestimmte Werkzeugwechseleinrichtung besteht grundsätzlich aus einem Werkzeughalter, an dem mittels einer integrierten Spanneinrichtung ein Werkzeugkopf auswechselbar angeordnet werden kann, der für den jeweiligen Einsatzzweck gerade benötigt wird. Das Werkzeugsystem weist dabei weiterhin eine integrierte Kühlmittelzuführung auf, mittels der dem Werkzeugkopf für die spanabhebende Bearbeitung Kühlmittel zugeführt werden kann.

Ebenso wie bei vielen anderen Werkzeugmaschinen kann auch bei dem bekannten Werkzeugsystem aus dem DE-U-84 37 207 der Wechsel des Werkzeugkopfes mit Hilfe einer automatischen Werkzeugwechseleinrichtung durchgeführt werden. Der Werkzeugkopf wird dabei beispielsweise durch einen von der Werkzeugmaschine unabhängig operierenden Schwenkarm ausgewechselt. Bei diesem Vorgang werden die Kupplungs- bzw. Spannflächen zwischen dem Werkzeughalter und dem Werkzeugkopf häufig durch hereinfallende Späne oder anderen Schmutz verunreinigt. Der neue Werkzeugkopf kann dann in den verschmutzten Werkzeughalter gar nicht oder nur fehlerhaft eingebaut werden. Der sichere und störungsfreie Betrieb der Werkzeugmaschine ist damit nicht mehr gewährleistet, die automatische Fertigung wird unterbrochen.

Außerdem ist bei dem bekannten Werkzeugsystem der eingangs angegebenen Art mit einer integrierten Kühlmittelzuführung von Nachteil, daß das Kühlmittel korrodierend wirkt. Dies macht sich insbesondere dadurch nachteilig bemerkbar, wenn beim Werkzeugwechsel stets ein gewisser Teil des Kühlmittels in der Kupplungsstelle verbleibt, was auf lange Sicht zu Funktionsstörungen führen kann. Auch in dieser Hinsicht ist der sichere und störungsfreie Betrieb der Werkzeugmaschine nicht gewährleistet.

Um die Kupplungsstelle zwischen dem Werkzeugkopf und dem Werkzeughalter auf technisch einfache Weise reinigen zu können, und zwar insbesondere auch im Hinblick bei dem beim Werkzeugwechsel auftretenden Kühlmittelaustritt, ist auch bereits vorgeschlagen worden, zusätzlich eine im Bereich der Kupplungsstelle zwischen dem Werkzeugkopf und dem Werkzeughalter mündende Druckluftzuführung vorzusehen.

Ein derart ausgebildetes Werkzeugsystem hat den Vorteil einer integrierten Reinigungseinrichtung, mittels der die Kupplungsstelle zwischen dem Werkzeugkopf und dem Werkzeughalter auf technisch einfache Weise gereinigt werden kann, so daß sich dort keine Verunreinigungen absetzen können, die den Einbau eines neuen Werkzeugkopfes in der vorgeschriebenen Weise verhindern könnten. So kann die Druckluft Späne oder anderen Schmutz herausblasen, die bei einem Werkzeugwechsel hereinfallen und die Kupplungsflächen verunreinigen. Ebenso kann der beim Werkzeugwechsel auftretende Kühlmittelverlust beseitigt werden. Durch die integrierte Reinigungseinrichtung ist somit ein sicherer und störungsfreier Betrieb der Werkzeugmaschine gewährleistet, ohne daß die Gefahr einer Unterbrechung der automatischen Fertigung besteht. Die Reinigungseinrichtung ist dabei sowohl für Werkzeugsysteme mit stehendem Werkzeug als auch für Werkzeugsysteme mit drehendem Werkzeug einsetzbar. An die Druckluftzuführung ist lediglich die Forderung zu stellen, daß sie sämtliche Kupplungs- bzw. Spannflächen mit der Druckluft erreicht und so störenden Schmutz wegbläst.

Nachteiligerweise kann jedoch Kühlmittel in die Druckluftzuführung eindringen und dort Korrosionsschäden verursachen, insbesondere bei heute durchaus üblichen hohen Kühlmitteldrücken bis zu 160 bar.

Es ist Aufgabe der vorliegenden Erfindung, das eingangs genannte Werkzeugsystem derart weiterzubilden, daß Korrosionsschäden im Bereich der Druckluftzuführung verhindert werden.

Diese Aufgabe wird dadurch gelöst, daß in der Druckluftzuführung ein Rückschlagventil angeordnet ist. Das Rückschlagventil verhindert, daß insbesondere im Hinblick auf den hohen Kühlmitteldruck bis zu 160 bar Kühlmittel in die Druckluftzuführung eindringen kann und dort möglicherweise zu Korrosionsschäden führt. Insbesondere wird durch das Rückschlagventil verhindert, daß Kühlmittel direkt in die Werkzeugmaschine dringt, was zu sehr großen Schäden führen könnte.

Vorzugsweise besteht das Rückschlagventil aus einer gegen einen Ventilsitz federbelasteten Kugel oder dergleichen. Ein Rückschlagventil dieser Art hat sich in der Technik bewährt und zeichnet sich durch seine Zuverlässigkeit aus. Statt dessen sind jedoch auch andere Rückschlagventile denkbar, die den gleichen Zweck erfüllen.

In einer Weiterbildung des Rückschlagventils ist dieses derart ausgebildet und in der Druckluftzuführung angeordnet, daß sich dessen Schließkraft bei einem rotierenden Werkzeugsystem bei sich erhöhender Drehzahl erhöht, wenn also das Werkzeugsystem beispielsweise eine rotierende Spindel aufweist. Dadurch ist gewährleistet, daß bei sich erhöhender Drehzahl sich die Dichtwirkung stetig erhöht und somit die Funktionssicherheit des Rückschlagventils in jedem Betriebszustand gewährleistet ist.

In einer weiteren Weiterbildung der Druckluftzuführung weist diese im Bereich der Kupplungsstellenmündung eine radiale Komponente auf. Dies führt bei einem rotierenden Werkzeugsystem dazu, daß die Zentrifugalkraft eventuell in die Druckluftzuführung eindringendes Kühlmittel nach außen befördert und somit die Druckluftzuführung vor Korrosionsschäden bewahrt. Insbesondere weist die Druckluftzuführung, wenn in dieser ein Rückschlagventil angeordnet ist, hinter diesem eine radiale Komponente auf, so daß die gesamte Druckluftzuführung vor einem Eindringen von Kühlmittel geschützt ist. Dadurch wird auch das Rückschlagventil entlastet.

In einer Weiterbildung weist die Druckluftzuführung eine Sensoreinrichtung für den beim Spannen des Werkzeugkopfes in der Sollposition entstehenden Staudruck auf. Auf diese Weise ist eine Funktionskontrolle realisiert, ob der Werkzeugkopf nach dem Spannvorgang seine vorgeschriebene Position eingenommen hat, wenn also der Werkzeugkopf die Austritte der Druckluftzuführung im Werkzeughalter verschließt, so daß in der Druckluftzuführung ein Staudruck entsteht. Die Funktionskontrolle ist sowohl bei einem automatischen Werkzeugwechsel als auch bei einem von Hand durchgeführten Wechsel möglich.

Um eine gleichmäßige Reinigung der Kupplungsstelle zwischen dem Werkzeugkopf und dem Werkzeughalter zu gewährleisten, wird schließlich in einer Weiterbildung vorgeschlagen, daß die Druckluftzuführung in einer ringförmigen Verteilung mündet.

Zwei Ausführungsformen eines erfindungsgemäßen Werkzeugsystems mit einer integrierten Reinigungseinrichtung wird nachfolgend anhand der Zeichnungen beschrieben. In diesen zeigt:
- Fig. 1: eine schematische Ansicht einer ersten Ausführungsform eines Werkzeugsystems;
- Fig. 2: eine schematische Ansicht einer zweiten Ausführungsform eines Werkzeugsystems.

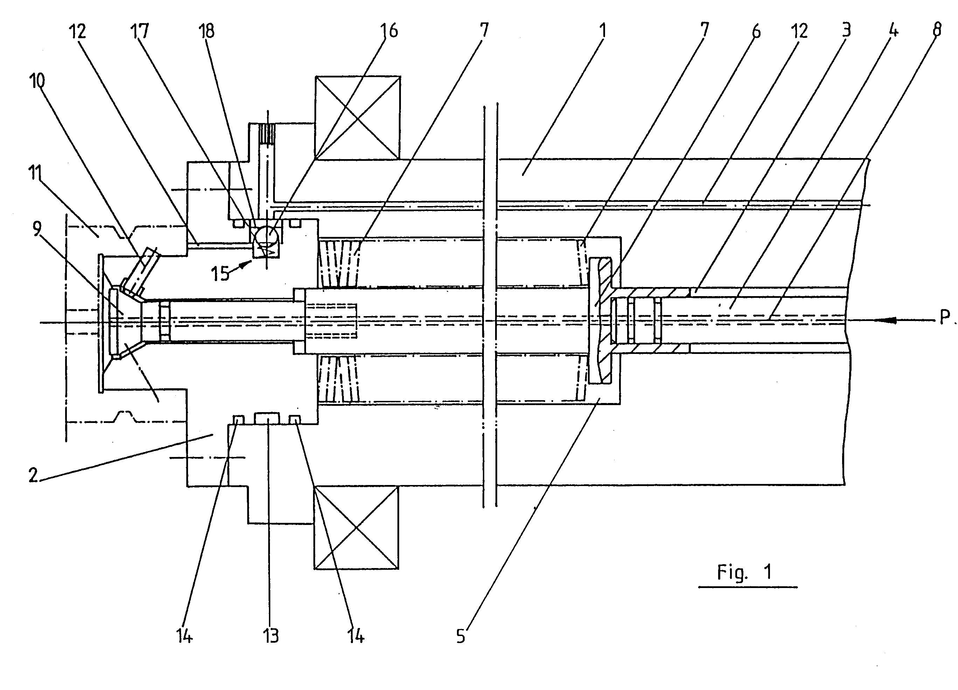

Das in Fig. 1 dargestellte Werkzeugsystem weist einen Werkzeughalter 1 auf, auf dessen vorderes Ende ein Werkzeughalterkopf 2 aufgeschraubt ist. Der Werkzeughalter 1 bzw. der Werkzeughalterkopf 2 weist eine zentrale Aufnahmebohrung 3 auf, in der längsverschiebbar ein Spannbolzen 4 angeordnet ist. In einer Erweiterung 5 der Aufnahmebohrung 3 weist der Spannbolzen 4 eine angeformte Ringscheibe 6 auf, zwischen der und dem hinteren Ende des Werkzeughalterkopfes 2 ein Tellerfederpaket 7 abgestützt ist. Dieses drückt den Spannbolzen 4 in seine hintere Arbeitsposition.

Wie in der Zeichnung zu erkennen ist, ist der Spannbolzen 4 aus zwei Teilen zusammengesetzt und weist vor allem eine koaxiale Kühlmittelzuführung 8 auf, die am vorderen Ende des Spannbolzens 4 in einem kegelstumpfförmigen Spannbolzenkopf 9 mündet. An den Mantelflächen dieses Spannbolzenkopfes 9 liegen Spannstifte 10 an, die in dieser Position des Spannbolzens 4 bzw. des Spannbolzenkopfes 9 in die Verriegelungsstellung verschoben sind, in der die vorderen Enden der Spannstifte 10 über die Mantelfläche des Werkzeughalterkopfes 2 ragen. Mittels dieser Spannstifte 10 kann ein strichpunktiert dargestellter Werkzeugkopf 11 am Werkzeughalter 1 und dabei insbesondere am Werkzeughalterkopf 2 verriegelt werden. Zu diesem Zweck wird der Spannbolzen 4 in Richtung des Pfeiles P nach vorne bewegt, so daß durch eine Federbelastung der Spannstifte 10 diese nach innen verschoben werden, so daß die Spannstifte 10 vollständig innerhalb des Werkzeughalterkopfes 2 angeordnet sind. Anschließend kann entweder von Hand oder mittels einer automatischen Werkzeugwechseleinrichtung der Werkzeugkopf 11 auf den Werkzeughalterkopf 2 aufgesteckt werden. Anschließend wird der Spannbolzen 4 aufgrund des Tellerfederpaketes 7 wieder in seine hintere Verriegelungsposition verschoben, so daß die Spannstifte 10 derart nach außen verschoben werden, daß sie in entsprechende Ausnehmungen im Werkzeugkopf 11 eingreifen, so daß dieser am Werkzeughalterkopf 2 fixiert ist und sich in der endgültigen Arbeitsposition befindet. Der Austausch des Werkzeugkopfes 11 gegen einen anderen erfolgt in der entsprechenden Weise.

Wie in Fig. 1 zu erkennen ist, weist der Werkzeughalter 1 bzw. der Werkzeughalterkopf 2 eine zur Kühlmittelzuführung 8 parallele Druckluftzuführung 12 auf, die in einem im Werkzeughalterkopf 2 ausgebildeten Ringkanal 13 mündet, der zu diesem Zweck beidseitig mittels O-Ringen abgedichtet ist. Von diesem Ringkanal 13 gehen zur Stirnseite des Werkzeughalterkopfes 2 gleichmäßig um den Umfang verteilt weiterführende Druckluftzuführungen 12 aus, und zwar in dem Bereich, wo der Werkzeugkopf 11 am Werkzeughalterkopf 2 anliegt. Bei dieser Ausführungsform verläuft dabei dieser Abschnitt der Druckluftzuführung 12 parallel zur Mittellachse des Werkzeugsystems.

Wie in der Zeichnung zu erkennen ist, ist in der Druckluftzuführung 12 ein Rückschlagventil 15 angeordnet. Dieses besteht aus einer Kugel 16, die mittels einer Feder 17 gegen einen Ventilsitz 18 gedrückt wird. Bei Druckbeaufschlagung der Druckluftzuführung 12 mittels Druckluft wird dabei die Kugel 16 entgegen der Kraft der Feder 17 vom Ventilsitz 18 abgehoben, so daß die Druckluft das Rückschlagventil 15 passieren kann und an der vorderen Stirnseite des Werkzeughalterkopfes 2 austritt. Dieses Rückschlagventil 15 verhindert, daß beispielsweise mittels eines Druckes von 160 bar aus der Kühlmittelzuführung 8 austretendes Kühlmittel in die Druckluftzuführung 12 eindringt und dort Korrosionsschäden verursacht, beispielsweise wenn das Kühlmittel direkt in die Werkzeugmaschine eindringt.

Die Druckluftzuführung 12 dient als Reinigungssystem, mittels dem die Kupplungs- und Spannflächen zwischen dem Werkzeugkopf 11 und dem Werkzeughalter 1 bzw. dem Werkzeughalterkopf 2 bei einem Werkzeugwechsel gereinigt werden können, indem vor dem Aufsetzen eines neuer Werkzeugkopfes 11 durch austretende Druckluft die Kupplungs- und Spannflächen gereinigt und so austretendes Kühlmittel bzw. beim Werkzeugwechsel hineinfallende Späne weggeblasen werden. Auf diese Weise ist gewährleistet, daß nach dem Aufsetzen eines neuen Werkzeugkopfes 11 dieser in seiner vorgeschriebenen Position eingespannt wird und somit ein sicherer und störungsfreier Betrieb der Werkzeugmaschine gewährleistet ist.

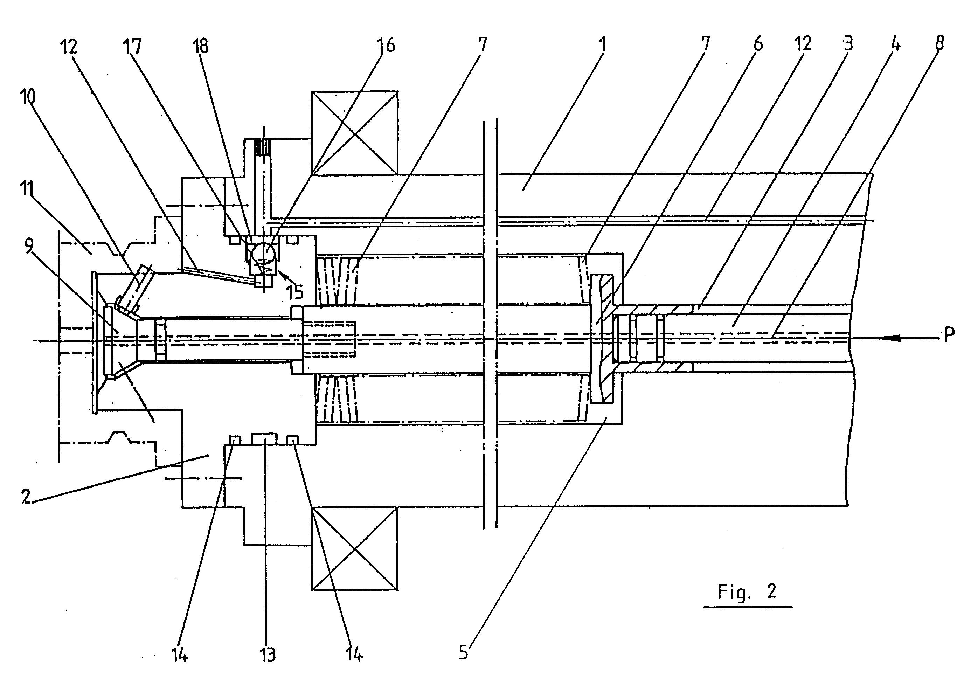

Die Ausführungsform gemäß Fig. 2 unterscheidet sich von der in Fig. 1 dargestellten Ausführungsform lediglich durch die Führung des Abschnittes der Druckluftzuführung 12 zwischen dem Rückschlagventil 15 und der vorderen Stirnfläche des Werkzeughalterkopfes 2. Während bei der Ausführungsform gemäß Fig. 1 dieser Abschnitt parallel zur Mittelachse des Werkzeugsystems verläuft, verläuft bei der Ausführungsform gemäß Fig. 2 dieser Abschnitt schräg nach außen. Dies hat den Vorteil, daß aufgrund einer radialen Komponente der Zentrifugalkraft eventuell eindringendes Kühlmittel nach außen abtransportiert wird und sich nicht in diesem Abschnitt der Druckluftzuführung 12 ablagern kann.

### Bezugszeichenliste

- 1: Werkzeughalter
- 2: Werkzeughalterkopf
- 3: Aufnahmebohrung
- 4: Spannbolzen
- 5: Erweiterung
- 6: Ringscheibe
- 7: Tellerfederpaket
- 8: Kühlmittelzuführung
- 9: Spannbolzenkopf
- 10: Spannstift
- 11: Werkzeugkopf
- 12: Druckluftzuführung
- 13: Ringkanal
- 14: O-Ring
- 15: Rückschlagventil
- 16: Kugel
- 17: Feder
- 18: Ventilsitz
- P: Pfeil

## Patentansprüche

1. Werkzeugsystem, bei dem ein Werkzeugkopf (11) mittels einer integrierten Spanneinrichtung auswechselbar im Werkzeughalter (1) angeordnet ist und daß eine integrierte Kühlmittelzuführung sowie eine in dem Bereich der Kupplungsstelle zwischen dem Werkzeugkopf (11) und dem Werkzeughalter (1) mündende Druckluftzuführung (12) aufweist,
**dadurch gekennzeichnet**,
daß in der Druckluftzuführung (12) ein Rückschlagventil (15) angeordnet ist.

2. Werkzeugsystem nach Anspruch 1, dadurch gekennzeichnet, daß das Rückschlagventil (15) aus einer gegen einen Ventilsitz (18) federbelasteten Kugel (16) oder dergleichen besteht.

3. Werkzeugsystem nach Anspruch 1 oder 2, dadurch gekennzeichnet, daß sich die Schließkraft des Rückschlagventils (15) bei einem rotierenden Werkzeugsystem bei sich erhöhender Drehzahl erhöht.

4. Werkzeugsystem nach einem der Ansprüche 1 bis 3, dadurch gekennzeichnet, daß die Druckluftzuführung (12) im Bereich der Kupplungsstellenmündung eine radiale Komponente aufweist.

5. Werkzeugsystem nach einem der Ansprüche 1 bis 3 sowie nach Anspruch 4, dadurch gekennzeichnet, daß die Druckluftzuführung (12) hinter dem Rückschlagventil (15) eine radiale Komponente aufweist.

6. Werkzeugsystem nach einem der Ansprüche 1 bis 5, dadurch gekennzeichnet, daß die Druckluftzuführung (12) eine Sensoreinrichtung für den beim Spannen des Werkzeugkopfes (11) in der Sollposition entstehenden Staudruck aufweist.

7. Werkzeugsystem nach einem der Ansprüche 1 bis 6, dadurch gekennzeichnet, daß die Druckluftzuführung (12) in einer ringförmigen Verteilung mündet.

## Claims

1. Tooling system, in which a tool head (11) is replaceably disposed in the tool holder (1) by means of an integrated clamping device, and which has an integrated coolant feed pipe as well as a compressed air feed pipe (12) feeding into the area of the coupling point between the tool head (11) and the tool holder (1), characterised in that a return valve (15) is disposed in the compressed air feed pipe (12).

2. Tooling system according to Claim 1, characterised in that the return valve (15) comprises a ball (16) or similar which is spring-loaded against a valve seat (18).

3. Tooling system according to Claim 1 or 2, characterised in that the closing force of the return valve (15) increases when the tooling system rotates at an increasing rotational speed.

4. Tooling system according to one of Claims 1 to 3, characterised in that the compressed air feed pipe (12) has a radial component where it feeds into the area of the coupling point.

5. Tooling system according to one of Claims 1 to 3 and according to Claim 4, characterised in that the compressed air feed pipe (12) has a radial component behind the return valve (15).

6. Tooling system according to one of Claims 1 to 5, characterised in that the compressed air feed pipe (12) has a sensor arrangement for the impact pressure produced when the tool head (11) is clamped in the desired position.

7. Tooling system according to one of Claims 1 to 6, characterised in that the compressed air feed pipe (12) feeds into a ring-shaped distribution means.

## Revendications

1. Système d'outils dans le cas duquel une tête d'outil (11) est disposée dans le porte-outil (1) de façon à pouvoir être remplacée au moyen d'un dispositif de serrage intégré, et qui présente une alimentation intégrée en fluide de refroidissement ainsi qu'une alimentation en air comprimé (12) débouchant, dans la zone du point d'accouplement, entre la tête d'outil (11) et le porte-outil (1),
caractérisé en ce que,
dans l'alimentation en air comprimé (12), est disposé un clapet anti-retour (15).

2. Système d'outils suivant la revendication 1, caractérisé en ce que le clapet anti-retour (15) est constitué d'une bille (16), ou similaire, appuyée par un ressort contre un siège de soupape (18).

3. Système d'outils suivant la revendication 1 ou la revendication 2, caractérisé en ce que, dans le cas d'un système d'outils tournant, la force de fermeture du clapet anti-retour (15) augmente si la vitesse de rotation augmente.

4. Système d'outils suivant l'une quelconque des revendications 1 à 3, caractérisé en ce que l'alimentation en air comprimé (12) présente, dans la zone où elle débouche sur le point d'accouplement, une composante radiale.

5. Système d'outils suivant l'une quelconque des revendications 1 à 3, ainsi que suivant la revendication 4, caractérisé en ce que l'alimentation en air comprimé (12) présente, derrière le clapet anti-retour (15), une composante radiale.

6. Système d'outils suivant l'une quelconque des revendications 1 à 5, caractérisé en ce que l'alimentation en air comprimé (12) présente un dispositif de détection de la pression dynamique se produisant lors du serrage de la tête d'outil (11) dans la position de consigne.

7. Système d'outils suivant l'une quelconque des revendications 1 à 6, caractérisé en ce que l'alimentation en air comprimé (12) débouche dans un répartiteur annulaire.
